## Europäisches Patentamt
## European Patent Office
## Office européen des brevets

(19)

(11) Veröffentlichungsnummer : **0 378 627 B1**

(12)

# EUROPÄISCHE PATENTSCHRIFT

(45) Veröffentlichungstag der Patentschrift :
26.08.92 Patentblatt 92/35

(51) Int. Cl.$^5$ : **F02D 41/22, F02D 41/28, F02D 11/10, F02D 31/00**

(21) Anmeldenummer : 89907085.8

(22) Anmeldetag : 29.06.89

(86) Internationale Anmeldenummer :
PCT/DE89/00429

(87) Internationale Veröffentlichungsnummer :
WO 90/01114 08.02.90 Gazette 90/04

(54) **FEHLFUNKTIONS-PRÜFVERFAHREN UND -VORRICHTUNG FÜR LEERLAUFREGELUNG.**

(30) Priorität : 20.07.88 DE 3824631

(43) Veröffentlichungstag der Anmeldung :
25.07.90 Patentblatt 90/30

(45) Bekanntmachung des Hinweises auf die
Patenterteilung :
26.08.92 Patentblatt 92/35

(84) Benannte Vertragsstaaten :
DE FR GB IT

(56) Entgegenhaltungen :
EP-A- 0 121 937
EP-A- 0 171 641
EP-A- 0 249 340
EP-A- 0 269 118
EP-A- 0 276 003
EP-A- 0 298 187
FR-A- 2 569 231
GB-A- 2 119 972
US-A- 4 541 378
US-A- 4 612 615
US-A- 4 641 622

(73) Patentinhaber : **ROBERT BOSCH GMBH**
**Postfach 30 02 20**
**W-7000 Stuttgart 30 (DE)**

(72) Erfinder : **HECK, Klaus**
**Erbachstr. 48**
**W-7051 Hohenacker (DE)**
Erfinder : **MEZGER, Manfred**
**Lindenweg 53**
**W-7145 Markgröningen (DE)**
Erfinder : **PLAPP, Günther**
**Gymnasiumstr. 26**
**W-7024 Filderstadt 1 (DE)**
Erfinder : **JAUTELAT, Rüdiger**
**Zeppelinstr. 43**
**W-7146 Tamm (DE)**
Erfinder : **HUWIG, Stefan**
**W.-A.-Mozart-Str. 18**
**W-7014 Kornwestheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur Fehlfunktionsüberprüfung einer Leerlaufregelungsanordnung für eine Brennkraftmaschine.

### Stand der Technik

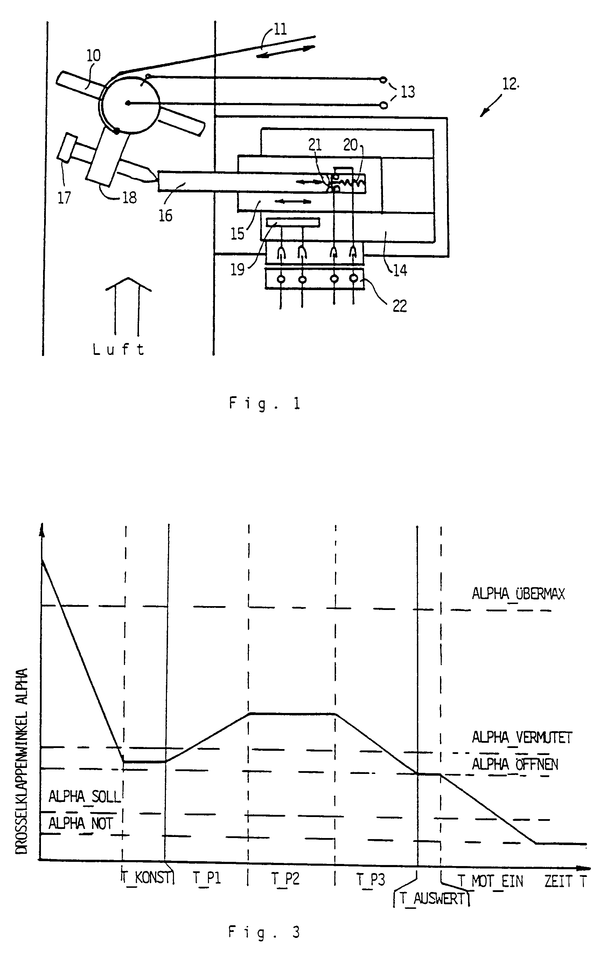

Die in Serie befindliche Leerlaufregelungsanordnung gemäß der beigefügten Fig. 1 weist eine Drosselklappe 10 auf, die mit Hilfe eines Verstellzuges 11 oder eines Stellmotore 12 verstellbar ist. Der Stellwinkel ALPHA der Drosselklappe 10 wird aus der Spannung bestimmt, die an Potentiometeranschlüssen 13 von einem Potentiometer abgegriffen wird, das mit der Drehachse der Drosselklappe 10 verbunden ist.

Der Stellmotor 12 weist ein Stellgehäuse 14 auf, in dem eine Stellwelle 15 hin- und herschiebbar angeordnet ist. In der Stellwelle 15 selbst ist ebenfalls ein hin- und herschiebbares Teil angeordnet, nämlich ein Leerlauf-Kontaktstift 16. Das freie Ende dieses Kontaktstiftes 16 drückt in der in Fig. 1 dargestellten Stellung auf eine Justierschraube 17, die durch einen mit der Achse der Drosselklappe 10 verbundenen Stellflansch 18 geschraubt ist. Das Verstellen der Stellwelle 15 erfolgt über einen schematisch dargestellten elektrischen Antrieb 19, der je nach Polung der ihm zugeführten Spannung die Stellwelle 15 entweder einfährt oder ausfährt. Es sei zur weiteren Erläuterung angenommen, daß, abweichend von der Darstellung gemäß Fig. 1, die Stellwelle 15 so weit eingefahren ist, daß der Leerlauf-Kontaktstift 16 nicht auf die Justierschraube 17 drückt. In dieser Stellung wird der Leerlauf-Kontaktstift 16 durch eine Feder 20 bis zu einem (nicht dargestellten) Anschlag aus der Stellwelle 15 herausgeschoben. Er drückt dann nicht auf einen Leerlaufkontakt 21, der demgemäß geöffnet ist. Wird nun der Antrieb 19 so mit Spannung versorgt, daß er die Stellwelle 15 so weit verschiebt, daß der Leerlauf-Kontaktstift 16 zur Anlage an die Justierschraube 17 gelangt, erfolgt zunächst noch kein Verdrehen der Drosselklappe 10 bei weiterem Herausschieben der Stellwelle 15, sondern zunächst wird der Leerlauf-Kontaktstift 16 in die Stellwelle 15 so weit hereingeschoben, bis er den Leerlaufkontakt 21 schließt und nicht mehr weiter einschließbar ist. Erst dann erfolgt bei weiterem Herausfahren der Stellwelle 15 ein Verdrehen der Drosselklappe 10. Die Darstellung gemäß Fig. 1 entspricht einer Stellung mit geschlossenem Leerlaufkontakt 21.

Steht der Stellmotor 12 in einer bestimmten Stellung und ist der Leerlaufkontakt 21 geschlossen, wird dann aber Gas gegeben, sorgt also der Verstellzug 11 für ein weiteres Öffnen der Drosselklappe 10, hebt die Justierschraube 17 vom Leerlauf-Konstaktstift 16 ab, wodurch letzterer durch die Feder 20 bis zu seinem vorderen Anschlag aus der Stellwelle 15 heraus-gedrückt wird und sich dadurch der Leerlaufkontakt 21 öffnet. Erfolgt dieses Öffnen aufgrund eines Fehlers nicht, oder erfolgt es zwar, kann jedoch aufgrund eines Kurzschlusses in der Leerlaufkontakt-Ansteuerschaltung nicht festgestellt werden, bleibt die Leerlaufregelung aktiv, obwohl keine Leerlaufbedingungen mehr vorliegen. Um diesen Fehler ermitteln zu können, wird der Drosselklappenwinkel ALPHA dahingehend überwacht, ob er einen Winkelbereich erreicht, der Vollastbetrieb kennzeichnet. Ist dies der Fall, ist aber gleichzeitig noch der Leerlaufkontakt 21 geschlossen, ist dies das Zeichen für einen Fehler in der Leerlaufkontaktüberwachung. Sobald dieser Fehler festgestellt ist, wird die Stellwelle 15 ganz eingefahren und dann für eine vorbestimmte Zeitspanne wieder ausgefahren, damit sie eine Stellung erzielt, in der die Drosselklappe bei Anlage der Justierschraube 17 am Leerlauf-Kontaktstift 16 einen Winkel ALPHA NOT einnimmt, der ausreichend groß ist, daß die mit Hilfe der Anordnung betriebene Brennkraftmaschine nicht stehen bleiben kann. Die Leerlaufregelung wird gleichzeitig unterbunden.

Dieses Verfahren ist in Bezug auf das Feststellen des genannten Kurzschlußfehlers relativ unzuverlässig, und es ist überhaupt nicht dazu in der Lage, den umgekehrten Fehler, nämlich das dauernde Offenbleiben des Leerlaufkontaktes festzustellen oder Fehler festzustellen, die mit der Funktion des Stellmotors zusammenhängen.

Zur Überwachung der Funktionsfähigkeit von Stellmotoren einer Drosselklappe ist aus der EP 2 69 118 A2 bekannt, nach Abstellen der Brennkraftmaschine und im Schubbetrieb unter Kraftstoffabschaltung den Motor auf vorgegebene Weise anzusteuern und zu überprüfen, ob die Drosselklappe der vorgegebenen Ansteuerung folgt. Ist dies nicht der Fall, wird auf einen Fehler des Stellmotors geschlossen. Eine derartige Vorgehensweise kann jedoch die oben dargestellte Problematik nicht lösen, da ein korrekt arbeitender Leerlaufkontakt Voraussetzung dieser Überprüfung ist.

Der Erfindung liegt die Aufgabe zugrunde, ein zuverlässigeres Verfahren zur Fehlerfunktionsüberprüfung einer Leerlaufregelungsanordnung anzugeben. Der Erfindung liegt weiterhin die Aufgabe zugrunde, eine Vorrichtung zum Durchführen eines solchen Verfahrens anzugeben.

### Vorteile der Erfindung

Erfindungsgemäße Verfahren sind durch die Merkmale des Anspruchs 1 gegeben. Die erfindungsgemäße

EP 0 378 627 B1

Vorrichtung entspricht den Merkmalen von Anspruch 10.

Vorteile der Erfindung

Das erfindungsgemäße Verfahren gemäß Anspruch 1 erlaubt das Feststellen und Unterscheiden von Unterbrechungs- und Stellmotorfehlern. Es wird die Schließfunktion des Leerlaufkontaktes überprüft, und dann, wenn der Kontakt nicht geschlossen ist, obwohl dies mit großer Wahrscheinlichkeit der Fall sein müßte, wird der Stellmotor einer Prüfbewegung unterzogen. Während dieser Prüfbewegung wird der Drosselklappenwinkel überwacht. Stellt sich bei diesem keinerlei Änderung ein, ist dies ein Zeichen dafür, daß ein Stellmotordefekt vorliegt. Ändert sich dagegen der Drosselklappenwinkel mit der Ansteuerung des Stellmotors, ist aber der Leerlaufkontakt dauernd offen, ist dies das Zeichen dafür, daß eine Unterbrechung des Leerlaufkontaktes vorliegt.

Wenn ein Fehler ermittelt worden ist, wird dies angezeigt; im einfachsten Fall durch eine Anzeigelampe. Zweckmäßigerweise wird der Fehler zusätzlich durch Abspeichern eines entsprechenden Wertes in einem Diagnosespeicher angezeigt. Auch ist es von Vorteil, Notlaufmaßnahmen zu ergreifen.

Die Prüfbedingung, die die Schließfunktion des Leerlaufkontaktes überprüft, kann sehr komplex ausgestaltet sein, um sicherzustellen, daß Prüfbewegungen nur ausgeführt werden, wenn die Wahrscheinlichkeit für einen Fehler bereits als sehr hoch festgestellt worden ist. Eine geringe Zahl von Prüfbewegungen ist anzustreben, da jede Prüfbewegung ein vom Fahrer nicht vorauszusehendes Verhalten der Brennkraftmaschine zur Folge hat.

Von besonderem Vorteil ist ein Prüfbedingungsschritt, gemäß dem die jeweilige Stellung der Stellwelle nach dem Öffnen des Stellkontaktes abgeschätzt wird. Zur jeweiligen Stellung wird der zugehörige Drosselklappenwinkel ALPHA_VERMUTET bestimmt, also derjenige Winkel, den die Drosselkappe dann einnimmt, wenn die Justierschraube an der Stellwelle anliegt und sich die Stellwelle tatsächlich in der vermuteten Position befindet. Der tatsächliche Drosselklappenwinkel wird dauernd mit dem vermuteten Winkel verglichen und dann, wenn der tatsächliche Winkel unter den vermuteten gefallen ist, der Leerlaufkontakt aber immer noch nicht geschlossen ist, wird ein Fehler angenommen. Diese Bedingung ist für sich bereits recht zuverlässig, jedoch kann durch das Überprüfen weiterer Bedingungen die Zahl von Fehlermeldungen noch reduziert werden. Insbesondere ist es von Vorteil, eine Prüfbewegung nur dann zuzulassen, wenn in der Zwischenzeit nach der letzten Prüfbewegung einmal Gas gegeben wurde.

Wie erläutert, beruht das Feststellen eines Stellmotorfehlers darauf, daß dieser zwar angesteuert wird, aber dennoch keine Änderung des Drosselklappenwinkels festgestellt wird. Nun kann zufälligerweise der Fall eintreten, daß die Drosselklappe gerade dann über den Verstellzug verstellt wird, wenn auch der Stellmotor angesteuert wird. Dann verdreht sich die Drosselklappe, obwohl sich unter Umständen die Stellwelle wegen eines Fehlers gar nicht bewegt. Um durch diesen Ablauf nicht eine zufällige Fehlermeldung zu erhalten, sieht eine vorteilhafte Weiterbildung vor, daß der Prüfbewegungsablauf mindestens eine Stillstandsprüfphase enthält, in der der Stellmotor nicht angesteuert wird. Bewegt sich die Drosselklappe in einer Stillstandsprüfphase, ist dies ein Zeichen dafür, daß die während der Bewegungsprüfphase ermittelte Bewegung ganz oder teilweise über den Verstellzug ausgelöst wurde. Der Testbewegungsablauf erlaubt damit keine sichere Diagnosemöglichkeit und ist zu wiederholen.

In der Bewegungsprüfphase wird die Drosselklappe verdreht, falls der Stellmotor ordnungsgemäß arbeitet. Es ist von Vorteil, dafür Vorsorge zu tragen, daß das Verdrehen während der Bewegungsprüfphase nicht zu unerwünschtem Laufverhalten der Brennkraftmaschine führt, was dadurch erzielt wird, daß der Prüfbewegungsablauf auch eine Rückstellprüfphase enthält, während derjenigen diejenige Drosseklappenverstellung im wesentlichen rückgängig gemacht wird, die während der Bewegungsprüfphase hervorgerufen wurde.

Wird eine Unterbrechung des Leerlaufkontaktes festgestellt, sieht eine vorteilhafte Weiterbildung vor, daß die Drosselklappe auf einen Notlaufwinkel gestellt wird. Liegt dagegen ein Stellmotorfehler vor, wird so verfahren, daß zeitweilig die Kraftstoffzufuhr unterbrochen wird, und zwar immer dann, wenn der Drosselklappenwinkel unter den durch den Stellmotor maximal ein- stellbaren Winkel fällt und die Drehzahl über eine Notlaufdrehzahl steigt.

Das ergänzte Verfahren gemäß dem untergeordneten Anspruch 8 betrifft das Feststellen eines Kurzschlußfehlers des Leerlaufkontaktes. Es unterscheidet sich vom bekannten Verfahren dadurch, daß als Prüfwinkel nicht ein solcher im Vollastbereich verwendet wird, sonder daß der Prüfwinkel ein Winkel ist, der nur möglichst wenig größer ist als der maximale Stellwinkel, wie er durch den Stellmotor einstellbar ist. Sobald dieser Prüfwinkel überschritten ist, aber dennoch kein Öffnungssignal vom Leerlaufkontakt kommt, ist dies das Zeichen für einen Kurzschlußfehler. Der Fehler kann mit dem erfindungsgemäßen Verfahren auch festgestellt werden, wenn ein Fahrer die Drosselklappe nur wenig über die Leerlaufstellung hinaus bewegt. Beim bekannten Verfahren mußte dagegen der Vollastbereich erreicht werden. Betrieb ein Fahrer die Brennkraftmaschine über längere Zeit nicht in Vollast, blieb der Kurzschlußfehler unerkannt.

Die erfindungsgemäße Vorrichtung enthält eine Einrichtung, die feststellt, ob eine Schließfunktions-Prüfbedingung erfüllt ist. Bei erfüllter Prüfbedingung steuert die Einrichtung den Stellmotor so an, daß dieser eine Prüfbewegung durchführen sollte. Die Einrichtung verfügt außerdem über eine Auswerteeinrichtung, zum Feststellen, ob der Drosselklappenwinkel die gewollte Prüfbewegung anzeigt. Ist dies nicht der Fall, gibt die Auswerteeinrichtung ein Fehlersignal an die Anzeigeeinrichtung aus.

Die erfindungsgemäße Vorrichtung ist vorzugsweise durch einen Mikrocomputer realisiert.

Zeichnung

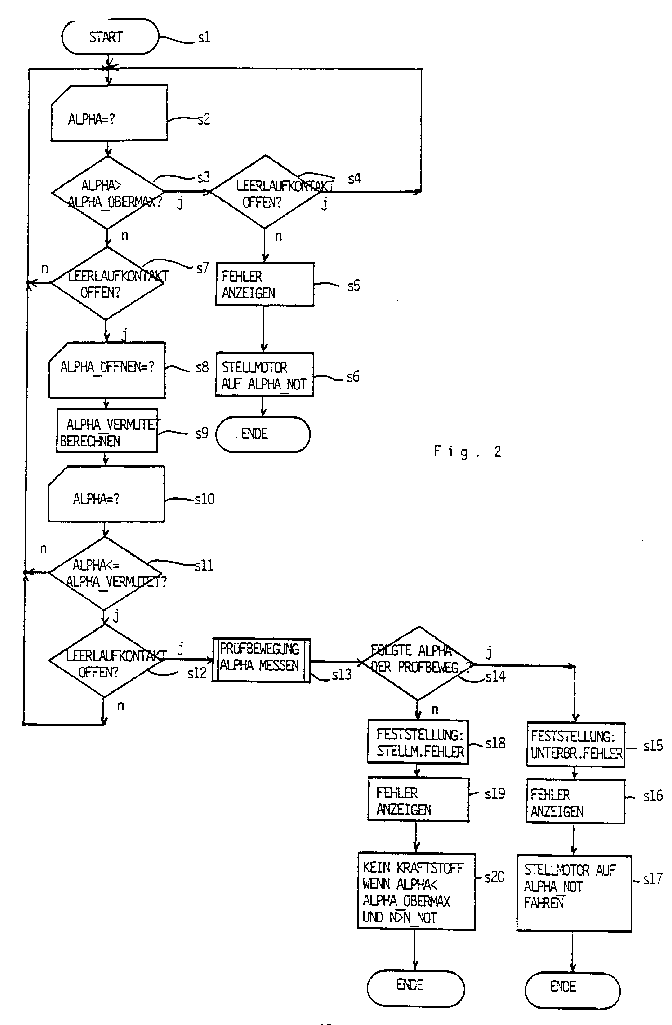

Die Erfindung wird im folgenden anhand von durch Figuren 2 und 3 veranschaulichten Ausführungsbeispielen näher erläutert. Fig. 1 zum Stand der Technik wurde bereits beschrieben. Es zeigen:

Fig. 1 eine schematische Draufsicht auf eine bekannte Leerlaufregelungsanordnung;

Fig. 2 ein Flußdiagramm zum Beschreiben eines Fehlfunktions-Prüfverfahrens zum Feststellen von Kurzschluß-Unterbrechungs- und Stellmotorfehlern bei einer Leerlaufregelungsanordnung; und

Fig. 3 ein Zeitdiagramm zum Erläutern eines modifizierten Verfahrens der eben genannten Art.

Beschreibung von Ausführungsbeispielen

Bei dem anhand des Flußdiagramms von Fig. 2 veranschaulichten Ausführungsbeispiel wird nach einem Startschritt S1 in einem Schritt S2 der Drosselklappenwinkel ALPHA gemessen. In einem Schritt S3 wird der Winkel ALPHA mit einem Winkel ALPHA_ÜBER_MAX verglichen. Dieser Schritt S3 stellt einen Teilschritt in der Prüfung auf Kurzschluß des Leerlaufkontaktes dar. Wird nämlich der Vergleich gemäß Schritt S3 bejaht und wird bei der sich dann anschließenden Untersuchung in einem Schritt S4 festgestellt, daß der Leerlaufkontakt nicht offen ist, ist dies das Zeichen für einen Kurzschlußfehler. In einem Schritt S5 wird dieser Fehler angezeigt und in einem Schritt S6 wird der Stellmotor auf eine solche Stellung gefahren, daß sich der Drosselklappenwinkel ALPHA_NOT einstellt, wenn die anhand von Fig. 1 erläuterte Justierschraube 17 am Leerlauf-Kontaktstift 16 anliegt. Danach endet das Verfahren gemäß dem in Fig. 2 dargestellten Ausführungsbeispiel.

Wird im Schritt S4 festgestellt, daß der Leerlaufkontakt offen ist, so entspricht dies ordnungsgemäßer Funktion und der Überwachungsablauf beginnt mit Schritt S2 von neuem.

Bei dem in Schritt S3 verwendeten Vergleichswinkel ALPHA_ÜBER_MAX handelt es sich um einen Winkel, der möglichst dicht über demjenigen Drosselklappenwinkel ALPHA_MAX liegt, den die Drosselklappe einnimmt, wenn sie mit Hilfe des maximalen Stellhubs der Stellwelle 15 verdreht ist. Sobald der tatsächliche Drosselklappenwinkel ALPHA über diesem maximalen Winkel ALPHA-MAX liegt, muß der Leerlaufkontakt bei ordnungsgemäßer Funktion öffnen. Liegt der tatsächliche Winkel noch unter dem Vergleichswinkel, kann die beschriebene Überprüfung auf einen Kurzschlußfehler noch nicht erfolgen, und das Verfahren geht zu einem Schritt S7 über, in dem genau wie in Schritt S4 überprüft wird, ob der Leerlaufkontakt offen ist. Ist dies nicht der Fall, kehrt der Ablauf zum Schritt S2 zurück. Wird dann wieder Schritt S7 erreicht, hat sich jedoch in der Zwischenzeit der Leerlaufkontakt geöffnet, wird ein Schritt S8 erreicht, in dem der aktuelle Winkel ALPHA als Winkel ALPHA_ÖFFNEN registriert hat, d. h. als derjenige Winkel, bei dem sich der Leerlaufkontakt geöffnet hat. Dieser Winkel stimmt nicht exakt mit dem tatsächlichen Winkel überein, zu dem das Öffnen stattfand, da ja das Erfassen des Winkels erst erfolgt, wenn Schritt S8 erreicht wird. Schritt S8 wird bei ordnungsgemäßem Betrieb, z. B. alle 5 ms erreicht. Innerhalb dieser kurzen Zeitspanne ändert sich der Drosselklappenwinkel nur wenig, selbst wenn die Drosselklappe über den Verstellzug 11 schnell verstellt wird. Die durch das Zeitraster des Programmdurchlaufs hervorgerufene Verzögerung in der Winkelmessung führt daher zu keinem großen Fehler.

Das Öffnen des Leerlaufkontaktes auch unterhalb dem oben genannten Winkel ALPHA_MAX ist nichts Ungewöhnliches, da bei Leerlaufregelung die Stellwelle 15 nur wenig ausgefahren sein kann, z. B. bei warmer Brennkraftmaschine, und von dieser Stellung aus die Drosselklappe über den Verstellzug 11 verstellt wird. Das Öffnen kann jedoch auch dadurch erfolgt sein, daß eine Unterbrechung im Leerlaufkontaktkreis vorliegt, z. B. dadurch, daß ein Kontaktstecker 22 (Fig. 1) abgefallen ist. Um festzustellen, ob das öffnen aufgrund eines Fehlers erfolgte, schließen sich Prüfschritte S9 - S12 an.

In Schritt S9 wird ein Drosselklappenwinkel ALPHA_VERMUTET berechnet, den die Drosselklappe einnehmen müßte, wenn sie an einer sich in einer vermuteten Stellung befindlichen Stellwelle anliegt. Der Winkel ALPHA_VERMUTET setzt sich aus dem erläuterten Winkel ALPHA_ÖFFNEN und einem korrigierenden Winkel ALPHA_KORREKTUR zusammen. Der korrigierende Winkel umfaßt einen Winkel ALPHA_ÜB, der eine Winkeländerung durch Überschwingen des Stellmotors charakterisiert.

Im Schritt S10 wird der aktuelle Drosselklappenwinkel ALPHA gemessen und im Schritt S11 mit dem in Schritt S9 berechneten vermuteten Winkel ALPHA_VERMUTET verglichen. Wird festgestellt, daß der tatsächliche Winkel unter den vermuteten gefallen ist oder diesem gleich ist, wird in Schritt S12 überprüft, ob der Leerlaufkontakt geschlossen ist, was der Fall sein müßte. Wird das für ordnungsgemäßen Betrieb erwartete Ergebnis tatsächlich festgestellt, kehrt das Verfahren zu Schritt S2 zurück. Dorthin wird auch von Schritt S11 aus zurückgekehrt, wenn festgestellt wird, daß der tatsächliche Winkel noch größer ist als der vermutete. Wird nach dem Zurückkehren zu Schritt S2 wieder Schritt S8 durchlaufen, darf dort nicht wiederum der aktuelle Winkel als Öffnungswinkel ALPHA_ÖFFNEN gemessen werden. Um dies zu gewährleisten, wird dann, wenn Schritt S8 erstmals verlassen wird, eine Öffnungsflagge gesetzt, die immer dann rückgesetzt wird, wenn in Schritt S7 festgestellt wird, daß der Leerlaufkontakt nicht offen ist. Schritt S8 wird immer nur ausgeführt, wenn die Flagge rückgesetzt ist. Andernfalls bleibt der beim ersten Durchlaufen gespeicherte Winkel ALPHA_ÖFFNEN erhalten.

Wird in Schritt S12 festgestellt, daß der Leerlaufkontakt noch geöffnet ist, obwohl der tatsächliche Drosselklappenwinkel bereits unter dem vermuteten liegt, wird in einem Schritt S13 ein Prüfbewegungs-Unterprogramm ausgeführt, in dem der Stellmotor so angesteuert wird, daß er sich bewegen sollte. Gleichzeitig wird der Drosselklappenwinkel ALPHA gemessen. Wird in einem Schritt S14 der Prüfbewegungsablauf ausgewertet und dabei festgestellt, daß der Drosselklappenwinkel der Prüfbewegung folgte, ist dies ein Zeichen dafür, daß der Stellmotor ordnungsgemäß arbeitet, daß aber der Leerlaufkontakt eine Unterbrechung aufweist, da er ja nicht schloß, obwohl die Drosselklappe an der Stellwelle anlag. Die genannte Feststellung erfolgt in einem Schritt S15 und wird in einem Schritt S16 angezeigt. In einem Schritt S17 erfolgt eine Notlaufeinstellung, die mit der oben unter Schritt S6 genannten identisch ist.

Wird in Schritt S14 dagegen festgestellt, daß der Drosselklappenwinkel der Bewegung der Stellwelle nicht folgte, wird in einem Schritt S18 festgestellt, daß ein Stellmotorfehler vorliegt, was in einem Schritt S19 angezeigt wird. In einem Schritt S20 wird ein Notlaufunterprogramm ausgeführt, das darin besteht, daß die Kraftstoffzufuhr immer dann unterbrochen wird, wenn der tatsächliche Drosselklappenwinkel ALPHA unter den oben genannten Winkel ALPHA_ÜBERMAX fällt und gleichzeitig die Drehzahl über eine Notlaufdrehzahl N_NOT steigt.

Die Fehleranzeige gemäß den Schritten S5, S16 und S19 erfolgt über eine Warnlampe und zusätzlich dadurch, daß der entsprechende Fehler in einen Diagnosespeicher eingeschrieben wird. Leuchtet die Warnlampe auf, begibt sich der Fahrzeugbetreiber zur Diagnosestation und diese wertet den Inhalt des Diagnosespeichers aus. Damit der Diagnosespeicher möglichst zuverlässige Information erhält, ist es sinnvoll, das erläuterte Verfahren nach den Schritten S6 öder S17 nicht abzubrechen, wovon bei der bisherigen Erläuterung ausgegangen wurde, sondern das Prüfverfahren erneut ablaufen zu lassen, um festzustellen, ob der zunächst gemeldete Fehler nicht durch einen anderen Fehler vorgetäuscht wurde. So kann insbesondere noch eine Fehlerdiagnose in Bezug auf die Zuverlässigkeit des Drosselklappenpotentiometers durchgeführt werden. Stellt sich bei einer Überprüfung des Drosselklappenpotentiometers heraus, daß dieses ungenau arbeitet, ist es von Vorteil, einen zuvor festgestellten Stellmotorfehler zu löschen. Dadurch wird verhindert, daß ein Stellmotor unnötigerweise ausgetauscht wird. Erst wenn nach Reparatur des Drosselklappenpotentiometers der Stellmotorfehler wieder festgestellt wird, ist sicher, daß es sich tatsächlich um einen solchen handelt.

Die Stellmotoransteuerung zum Erzielen des Notlaufwinkels ALPHA_NOT gemäß den Schritten S6 und S17 kann erfolgen, wie oben anhand des Standes der Technik erläutert. Vorteilhafter ist es jedoch, den Stellmotor nicht nur für eine vorgegebene Zeitspanne, ausgehend von seiner ganz eingefahrenen Stellung auszufahren, sondern ein solches Ausfahren nur in einem ersten Schritt vorzunehmen. Wird danach festgestellt, daß der dauernd überwachte Drosselklappenwinkel unter den Winkel ALPHA_NOT fallen kann, wird diese Feststellung dazu ausgenutzt, die Stellwelle so lange in kleinen vorgegebenen Schritten auszufahren, bis kein weiteres Fallen des tatsächlichen Drosselklappenwinkels unter den Notlaufwinkel mehr festgestellt wird.

Beim Verfahren gemäß Fig. 2 ist die einzige Bedingung zum Auslösen der Prüfbewegung die Feststellung, daß der tatsächliche Drosselklappenwinkel unter den vermuteten gefallen ist, der Leerlaufkontakt aber dennoch geöffnet ist. Allein mit dieser Bedingung würde relativ häufig die Prüfbewegung ausgelöst werden, da der vermutete Winkel mit einer relativ breiten Fehlerspanne behaftet ist. Dies, weil sich mit dem derzeit bekannten Aufbau nur ungenau abschätzen läßt, wie weit die Stellwelle 15 innerhalb einer vorgegebenen Zeitspanne tatsächlich aus- oder eingefahren wird. Wird eine Anordnung verwendet, die eine sehr genaue Voraussage der Stellung der Stellwelle aufgrund der Ansteuerungszeiten des Stellmotors 12 erlaubt, kann die anhand von Fig. 2 erläuterte Bedingung zum Auslösen der Prüfbewegung voll ausreichend sein.

Ausgehend vom Zeitdiagramm gemäß Fig. 3 werden nun Variationen des Grundverfahrens gemäß Fig. 2 erläutert. Zum Auslösen der Prüfbewegung müssen folgende Bedingungen erfüllt sein:

(1) Der Drosselklappenwinkel ALPHA muß kleiner sein als ALPHA_VERMUTET, welcher Winkel nach der oben angegebenen Art berechnet ist;

(2) Es darf für eine vorgegebene Zeit T_KONST keine Drosselklappenbewegung stattgefunden haben;

(3) Seit der letzten Testbewegung muß der Drosselklappenwinkel ALPHA den oben genannten ALPHA_ÜBERMAX überschritten haben, d. h. es muß ein Gasgeben erkannt worden sein;

(4) Der Sollwinkel ALPHA_SOLL für die Leerlaufregelung muß erheblich kleiner sein als der vermutete Winkel ALPHA_VERMUTET; und

(5) Der Drosselklappenwinkel ALPHA muß größer sein als der oben genannte Notlaufwinkel ALPHA_NOT.

Die genannten Winkel sind in Fig. 3 entlang der Ordinate aufgezeichnet. Die Abszisse ist Zeitachse. Vor der genannten Zeitspanne T_KONST liegt ein Zeitraum, in dem der Drosselklappenwinkel ALPHA von Werten über dem Winkel ALPHA_ÜBERMAX bis unter den vermuteten Winkel ALPHA_VERMUTET fällt. Während der Zeitspanne T_KONST bleibt der Winkel konstant. Auch die übrigen oben genannten Bedingungen sind erfüllt, wie unmittelbar durch Vergleich des tatsächlichen Winkels mit den genannten Schwellwinkeln erkennbar ist. Es wird daher nach Ablauf der Zeitspanne T_KONST ein Prüfbewegungsablauf eingeleitet.

Im Gegensatz zu dem ausgehend von Fig. 2 erläuterten Prüfbewegungsablauf ist der gemäß Fig. 3 in drei Phasen gegliedert, und zwar eine erste der Zeitdauer T_P1, eine zweite der Zeitdauer T_P2 und eine dritte der Zeitdauer T_P3. In der ersten Phase wird der Stellmotor für die Zeit T_P1 angesteuert. Im dargestellten Fall ist der Stellmotor in Ordnung, so daß der Drosselklappenwinkel ALPHA der Bewegung der Stellwelle folgt. In der zweiten Phase erfolgt keine Ansteuerung des Stellmotors, so daß der Drosselklappenwinkel unverändert bleibt. In der dritten Phase wird der Stellmotor wieder eingefahren. Dabei entspricht die Zeitspanne T_P3 der Zeitspanne T_P1 der ersten Phase. Dabei ist vorausgesetzt, daß die einfahrende Geschwindigkeit mit der ausfahrenden gleich ist. Sind die Geschwindigkeiten unterschiedlich, ist die einfahrende Zeit so zu bemessen, daß die Drosselklappe wieder zur Ausgangsstellung vor Einleiten des Prüfbewegungsablaufs zurückkehrt. Die Rückkehr kann auch dadurch gewährleistet werden, daß der aktuelle Drosselklappenwinkel dauernd mit dem Ausgangswinkel zu Beginn der Testbewegung verglichen wird und das Ansteuern des Stellmotores erst eingestellt wird, wenn der,tatsächliche Winkel wieder mit dem Ausgangswinkel übereinstimmt.

An den Testbewegungsablauf schließt sich eine Auswertezeitspanne T_AUSWERT an, in der geprüft wird, ob sich der Drosselklappenwinkel zumindest während Phase 1 veränderte. Wird dies festgestellt, wird überprüft, ob die Drosselklappe während Phase 2 stehen blieb. Ist dies nicht der Fall, muß die Bewegung durch den Fahrer verursacht sein, und es ist auch unklar, ob nicht die Bewegung während Phase 1 durch den Fahrer verursacht wurde. Die Prüfbewegung kann daher nicht zuverlässig ausgewertet werden und es schließt sich ein weiterer Prüfbewegungsablauf an, sobald die dafür erforderlichen Bedingungen wieder alle erfüllt sind. Wurde jedoch die Bewegung in Phase 1 und, falls überprüft, auch in Phase 3 festgestellt, fand jedoch in Phase 2 keine Bewegung statt, ist dies ein Zeichen für ordnungsgemäßes Arbeiten des Stellmotors, so daß als Fehlerursache nur eine Unterbrechung des Leerlaufkontaktes übrig bleibt. Während einer Zeit T_MOT_EIN wird daher der Stellmotor zum Einfahren der Stellwelle betrieben. Die genannte Zeit ist so bemessen, daß die Stellwelle eine Stellung erreicht, die dem oben genannten Notlaufwinkel ALPHA_NOT entspricht. Wird während der Auswertephase T_AUSWERT dagegen festgestellt, daß in keiner der Prüfbewegungsphasen eine Veränderung des Drosselklappenwinkels stattfand, wird die oben erläuterte Notfallmaßnahme für die Kraftstoffeinspritzung geschaltet.

Bei den beschriebenen Ausführungsbeispielen wurde der erläuterte Winkel ALPHA_ÜBERMAX zu drei verschiedenen Zwecken verwendet, nämlich zum Feststellen, ob ein Kurzschlußfehler vorliegt, zum Feststellen, ob seit dem letzten Testbewegungsablauf gasgegeben wurde und zum Festlegen einer der Bedingungen für den Notlauf nach einem festgestellten Stellmotorfehler. Abhängig vom jeweiligen Anwendungsfall können die Winkel für die genannten drei Zwecke jedoch auch nach unterschiedlichen Gesichtspunkten bemessen werden, so daß sie dann nicht mehr alle gleich sind.

Es wurde bereits einleitend darauf hingewiesen, daß der Winkel ALPHA_MAX etwa 20° beträgt. Der Überschwingungswinkel ALPHA_ÜB liegt typischerweise bei etwa 1°. Die Verstellbewegung während des Prüfbewegungsablaufs entspricht in einem Praxisversuch etwa 2°. Die Winkeldifferenz gemäß der oben genannten Bedingung (4) liegt beim Versuchsbeispiel ebenfalls bei etwa 2°. Die Zeit T_KONST kann einige 100 ms betragen. Die Größe des Notlaufwinkels ALPHA_NOT hängt stark von der Art der zu regelnden Brennkraftmaschine ab. Die Größe dieses Winkels kann noch abhängig von der Motortemperatur variiert werden, so daß für jede Temperatur gewährleistet ist, daß die Brennkraftmaschine nicht zu hoch dreht, aber auch nicht ausgeht.

Eine Vorrichtung zum Überprüfen des Unterbrechungs- und des Stellmotorfehlers weist eine Einrichtung zum Überwachen der Prüfbedingungen und zum Ausführen des Prüfbewegungsablaufes auf. Außerdem ist eine Auswerteeinrichtung zum beschriebenen Auswerten des Prüfbewegungsablaufes und zum Ausgeben eines Fehlersignales vorhanden.

Es wird darauf hingewiesen, daß die Überprüfung auf Unterbrechung oder auf einen Stellmotorfehler unterbrochen wird, sobald festgestellt wird, daß der Leerlaufkontakt inzwischen geschlossen ist. Die Stellung dieses Kontaktes wird also laufend überprüft. Das Verfahren kehrt auch dann zu seinem Ausgangspunkt zu-

EP 0 378 627 B1

rück, wenn das Schließen des Kontaktes während der Testbewegung oder während der Notlaufphase festgestellt wird, vorausgesetzt, daß das Verfahren mit dem Einstellen der Notlaufphase nicht komplett endet, sondern weitergeführt wird, wie weiter oben als Variante erwähnt.

**Patentansprüche**

1.  Verfahren zur Fehlfunktionsüberprüfung einer Leerlaufregelungsanordnung für eine Brennkraftmaschine, mit einem Stellmotor zum Einstellen des Winkels einer Drosselklappe zu Leerlaufregelungszwecken, einem Drosselklappenwinkelmesser und einem im Bereich des Stellmotors angeordneten Leerlaufkontakt, der im Leerlauffall geschlossen ist,
    gekennzeichnet durch wenigstens die folgenden Schritte:
    – Messen desjenigen Drosselklappenwinkels, der bei Öffnen des Leerlaufkontaktes vorliegt und Verwenden dieses Winkels als Öffnungsfallwinkel,
    – Vergleichen des Drosselklappenwinkels mit dem gegebenenfalls entsprechend den Stellmotorbewegungen korrigierten Öffnungsfallwinkel,
    – Auslösen eines Prüfbewegungsablaufes, der eine Bewegungsprüfphase aufweist, in der der Stellmotor angesteuert wird, um den Drosselklappenwinkel zu ändern, wenn der Drosselklappenwinkel gleich groß ist wie der Öffnungsfallwinkel oder kleiner ist als letzterer,
    – Schließen auf einen Stellmotorfehler, wenn während der Bewegungsprüfphase keine Änderung des Drosselklappenwinkels festgestellt wird,
    – Schließen auf eine Unterbrechung im Leerlaufkontaktkreis, wenn eine Änderung festgestellt wird,
    – Anzeigen des Fehlers.

2.  Verfahren nach Anspruch 1,
    dadurch gekennzeichnet, daß
    der Öffnungsfallwinkel mit Korrekturwinkeln korrigiert wird, die den Bewegungen des Stellmotors entsprechen, die dieser in derjenigen Zeit ausführt, in der der Leerlaufkontakt geöffnet ist, wodurch ein vermuteter Winkel erhalten wird, wobei der vermutete Winkel zur Auslösung des Prüfbewegungsablaufes ausgewertet wird.

3.  Verfahren nach Anspruch 2, **dadurch gekennzeichnet**, daß in der Prüfbedingung zum Auslösen des Prüfbewegungsablaufs zusätzlich der Bedingungsschritt verwendet wird, daß seit dem letzten Prüfbewegungsablauf der Drosselklappenwinkel mindestens einmal größer gewesen sein muß als ein Öffnungsprüfwinkel, der größer ist als der maximale Drosselklappenwinkel, wie er durch den Stellmotor einstellbar ist.

4.  Verfahren nach einem der Ansprüche 2 oder 3, **dadurch gekennzeichnet**, daß der Prüfbewegungsablauf mindestens eine Stillstandsprüfphase enthält, in der der Stellmotor nicht angesteuert wird, und daß der Prüfbewegungsablauf nur dann ausgewertet wird, wenn während der Stillstandsprüfphase keine Änderung des Drosselklappenwinkels festgestellt wurde.

5.  Verfahren nach einem der Ansprüche 2 - 4, **dadurch gekennzeichnet**, daß der Prüfbewegungsablauf eine Rückstellprüfphase enthält, während der diejenige Drosselklappenverstellung im wesentlichen rückgängig gemacht wird, die während der Bewegungsprüfphase hervorgerufen wurde.

6.  Verfahren nach einem der Ansprüche 2 - 5, **dadurch gekennzeichnet** , daß bei festgestellter Unterbrechung im Leerlaufschaltkreis der Stellmotor betrieben wird, bis der Drosselklappen-winkel im wesentlichen einen Notlaufwinkel einnimmt.

7.  Verfahren nach einem der Ansprüche 2 - 5, **dadurch gekennzeichnet** , daß bei festgestelltem Stellmotorfehler ein Unterbrechungssignal zum Unterbrechen der Kraftstoffzufuhr dann ausgegeben wird, wenn der Drosselklappenwinkel unter den durch den Stellmotor maximal einstellbaren Winkel fällt und die Drehzahl der zugehörigen Brennkraftmaschine über eine Notlaufdrehzahl steigt.

8.  Verfahren nach Anspruch 1,
    gekennzeichnet durch die folgenden zusätzlichen Schritte:
    – Vergleichen des Drosselklappenwinkels mit einem Prüfwinkel, welcher möglichst wenig größer ist als

7

der maximale Stellwinkel, wie er durch den Stellmotor einstellbar ist,
– Schließen auf einen Kurzschluß im Leerlaufkontaktkreis, wenn der Drosselklappenwinkel größer ist als der Prüfwinkel, der Leerlaufkontakt aber dennoch nicht geöffnet ist,
– Festlegen des Öffnungsfallwinkels, wenn der Drosselklappenwinkel kleiner gleich dem Prüfwinkel ist und der Leerlaufkontakt geöffnet ist.

9. Verfahren nach einem der Ansprüche 1 - 8, **dadurch gekennzeichnet**, daß der Leerlaufkontakt nicht im Leerlauffall geschlossen und ansonsten geöffnet ist, sondern daß diese beiden Stellungen vertauscht sind.

10. Vorrichtung zur Durchführung des Verfahren nach Anspruch 1 zur Fehlfunktionsüberprüfung einer Leerlaufregelungsanordnung für eine Brennkraftmaschine, welche Anordnung eines Stellmotors zum Einstellen des Winkels einer Drosselklappe zu Leerlaufregelungszwecken, einen Drosselklappenwinkelmesser und einen Leerlaufkontakt, der im Bereich des Stellmotors angeordnet ist und der im Leerlauffall geschlossen ist, aufweist, und die Vorrichtung eine Anzeigeeinrichtung zum Anzeigen eines festgestellten Fehlers aufweist,
gekennzeichnet durch
– Mittel, die derjenigen Drosselklappenwinkel erfassen und als Öffnungsfallwinkel verwenden, der bei Öffnen des Leerlaufkontaktes vorliegt,
– mit Vergleichsmitteln, welche den Drosselklappenwinkel mit dem gegebenenfalls entsprechend den Stellmotorbewegungen korrigierten Öffnungsfallwinkel vergleichen,
– mit einer Einrichtung, die den Stellmotor derart ansteuert, daß dieser eine Prüfbewegung durchführt, wenn aus dem dauernden Vergleich des Drosselklappenwinkels mit dem Öffnungsfallwinkel erkannt wurde, daß der Drosselklappenwinkel gleich groß oder kleiner als dieser ist,
– eine Auswerteeinrichtung, die feststellt, ob der Drosselklappenwinkel eine Änderung anzeigt und zum Ausgeben eines Stellmotorfehlersignals falls dies nicht der Fall ist, dagegen eines Unterbrechungsfehlersignals im Leerlaufkontaktkreis, falls dies der Fall ist,
– Mittel, die im Fehlerfall die Anzeigeeinrichtung zum Anzeigen des festgestellten Fehlers aktivieren.

## Claims

1. Procedure for the malfunction checking of an idling control arrangement for an internal combustion engine, having a servomotor for adjusting the angle of a throttle valve for idling control purposes, a throttle valve angle measuring device and an idling contact which is arranged in the region of the servomotor and is closed in the case of idling,
characterized by at least the following steps:
– measurement of the throttle valve angle when the idling contact opens and use of this angle as opening-case angle,
– comparison of the throttle valve angle to the opening-case angle, the latter having been corrected, if required, in accordance with the movements of the servomotor,
– triggering of a test movement sequence having a movement test phase in which the servomotor is activated in order to change the throttle valve angle if the throttle valve angle is equal to the opening-case angle or less than the latter,
– inferring of a fault in the servomotor if no change in the throttle valve angle is detected during the movement test phase,
– inferring of an interruption in the idling contact circuit if a change is detected,
– indication of the fault.

2. Procedure according to Claim 1, characterized in that the opening-case angle is corrected using correction angles which correspond to the movements of the servomotor which the latter carries out in the time in which the idling contact is open, a presumed angle thereby being obtained and the presumed angle being evaluated for the purpose of triggering the test movement sequence.

3. Procedure according to Claim 2, characterized in that, in the test condition for triggering the test movement sequence, the additional condition step is used that the throttle valve angle must have been greater at least once since the last test movement sequence than an opening test angle which is greater than the maximum throttle valve angle settable by the servomotor.

4. Procedure according to either of Claims 2 or 3, characterized in that the test movement sequence contains at least one standstill test phase, in which the servomotor is not activated, and in that the test movement sequence is only evaluated if no change in the throttle valve angle has been detected during the standstill test phase.

5. Procedure according to one of Claims 2 - 4, characterized in that the test movement sequence contains a return test phase, during which the throttle valve adjustment brought about during the movement test phase is essentially reversed.

6. Procedure according to one of Claims 2 - 5, characterized in that, in the event of an interruption having been detected in the idling circuit, the servomotor is operated until the throttle valve angle occupies essentially an emergency-running angle.

7. Procedure according to one of Claims 2 - 5, characterized in that, in the event of a servomotor fault having been detected, an interruption signal for the interruption of the fuel supply is emitted when the throttle valve angle falls below the maximum angle settable by the servomotor and the speed of the associated internal combustion engine rises above an emergency-running speed.

8. Procedure according to Claim 1, characterized by the following additional steps:
    – comparison of the throttle valve angle to a test angle, which is to the least extent possible greater than the maximum setting angle which can be set by the servomotor,
    – inferring of a short-circuit in the idling contact circuit if the throttle valve angle is greater than the test angle but the idling contact is nevertheless not yet open,
    – determination of the opening-case angle if the throttle valve angle is less than or equal to the test angle and the idling contact is open.

9. Procedure according to one of Claims 1 - 8, characterized in that it is not the case that the idling contact is closed in the case of idling and otherwise open but that these two positions are reversed.

10. Apparatus for carrying out the procedure according to Claim 1 for the malfunction checking of an idling control arrangement for an internal combustion engine, which arrangement has a servomotor for adjusting the angle of a throttle valve for idling control purposes, a throttle valve angle measuring device and an idling contact which is arranged in the region of the servomotor and is closed in the case of idling, and the apparatus has an indicating device for indicating a fault which has been detected,
    characterized by
    – means which record the said throttle valve angle and use it as the opening-case angle which is present when the idling contact opens
    – with comparison means which compare the throttle valve angle to the opening-case angle, the latter having been corrected, if required, in accordance with the movements of the servomotor,
    – with a device which activates the servomotor in such a way that the latter performs a test movement when the continuous comparison of the throttle valve angle to the opening-case angle has revealed that the throttle valve angle is equal to or less than the latter,
    – an evaluation device which establishes whether the throttle valve angle indicates a change and for emitting a servomotor fault signal if this is not the case or an interruption fault signal in the idling contact circuit if this is the case,
    – means which, in the case of a fault, activate the indicating device for indicating the fault which has been detected.

**Revendications**

1°) Procédé de contrôle de défauts de fonctionnement pour le réglage du ralenti d'un moteur à combustion interne, avec un moteur de positionnement pour établir l'angle d'un clapet d'étranglement aux fins de régler le ralenti, avec un appareil pour mesurer l'angle du clapet d'étranglement et avec un contact de ralenti disposé dans la zone du moteur de positionnement, contact qui est fermé au ralenti, procédé caractérisé par au moins les séquences suivantes :
    – mesure de l'angle du clapet d'étranglement, qui existe lors de l'ouverture du contact de ralenti et utilisation de cet angle comme angle d'ouverture,

– comparaison de l'angle du clapet d'étranglement avec l'angle d'ouverture corrigé le cas échéant d'une façon correspondant aux mouvements du moteur de positionnement,

– déclenchement d'un processus de mouvement de contrôle, qui présente une phase de contrôle du mouvement, au cours de laquelle le moteur de positionnement est actionné, pour modifier l'angle du clapet d'étranglement quand l'angle du clapet d'étranglement est aussi grand que l'angle d'ouverture ou est plus petit que ce dernier,

– fermeture pour un défaut du moteur de positionnement, quand pendant la phase de contrôle de mouvement, on ne constate aucune modification de l'angle du clapet d'étranglement,

– fermeture pour une interruption dans le circuit du contact de ralenti, quand on constate une variation,

– indication du défaut.

2°) Procédé selon la revendication 1, caractérisé en ce que l'angle d'ouverture est corrigé par des angles de correction, qui correspondent aux mouvements du moteur de positionnement, que celui-ci réalise dans le temps, pendant lequel le contact de ralenti est ouvert, grâce à quoi on obtient un angle supposé, lequel angle supposé est exploité pour déclencher le processus du mouvement de contrôle.

3°) Procédé selon la revendication 2, caractérisé en ce que dans la condition de contrôle pour déclencher le processus de mouvement de contrôle, on emploie en plus de la séquence de condition, le fait que depuis le dernier processus de mouvement de contrôle, l'angle du clapet d'étranglement doit être au moins une fois plus grand qu'un angle de contrôle d'ouverture, qui est plus grand que l'angle du clapet d'étranglement maximal, tel qu'il peut être établi par le moteur de positionnement.

4°) Procédé selon l'une des revendications 2 ou 3, caractérisé en ce que le processus de mouvement de contrôle comprend au moins une phase de contrôle d'arrêt, dans laquelle le moteur de positionnement n'est pas actionné, et en ce que le processus de mouvement de contrôle n'est alors exploité que quand on n'a pas constaté pendant la phase de contrôle d'arrêt une seule modification de l'angle du clapet d'étranglement.

5°) Procédé selon l'une des revendications 2 à 4, caractérisé en ce que le processus de mouvement de contrôle comprend une phase de contrôle de retour, pendant laquelle le déplacement du clapet d'étranglement est sensiblement ramené en arrière, déplacement qui a été exécuté pendant la phase de contrôle du mouvement.

6°) Procédé selon l'une des revendications 2 à 5, caractérisé en ce que dans le cas d'une interruption constatée dans le circuit d'enclenchement du ralenti, le moteur de positionnement est actionné jusqu'à ce que l'angle du clapet d'étranglement corresponde sensiblement à un angle d'urgence.

7°) Procédé selon l'une des revendications 2 à 5, caractérisé en ce que dans le cas d'un défaut constaté du moteur de positionnement, il est délivré un signal d'interruption pour interrompre l'alimentation du carburant, quand l'angle du clapet d'étranglement tombe en-dessous de l'angle maximal qui peut être mis en place par le moteur de positionnement et quand la vitesse de rotation du moteur à combustion interne correspondant passe au-dessus d'une vitesse de rotation d'urgence.

8°) Procédé selon la revendication 1, caractérisé par les séquences additionnelles suivantes:

– comparaison de l'angle du clapet d'étranglement avec un angle de contrôle, qui est aussi peu que possible plus grand que l'angle de réglage maximal, tel qu'il peut être mis en place par le moteur de positionnement,

– fermeture pour un court-circuit dans le circuit de contact du ralenti, quand l'angle du clapet d'étranglement est plus grand que l'angle de contrôle, mais quand le contact de ralenti n'est pas encore ouvert,

– détermination de l'angle d'ouverture, quand l'angle du clapet d'étranglement est plus petit que l'angle de contrôle et que le contact de ralenti est ouvert.

9°) Procédé selon l'une des revendications 1 à 8, caractérisé en ce que le contact de ralenti n'est pas fermé dans le cas du ralenti, mais au lieu de cela est ouvert, mais en ce que les deux positions sont interchangées.

10°) Dispositif pour la mise en oeuvre du procédé selon la revendication 1, pour le contrôle des défauts de fonctionnement d'une installation de réglage du ralenti d'un moteur à combustion interne, laquelle comporte l'installation d'un moteur de positionnement pour mettre en place l'angle d'un clapet d'étranglement aux fins de réglage du ralenti, un appareil de mesure de l'angle du clapet d'étranglement et un contact de ralenti, qui est disposé dans la zone du moteur de positionnement et qui est fermé dans le cas du ralenti et en ce que le dispositif présente un appareil indicateur pour indiquer un défaut constaté, dispositif caractérisé :

– par des moyens qui enregistrent l'angle du clapet d'étranglement et sont utilisés comme angle d'ouverture, qui existe lors de l'ouverture du contact de ralenti,

– avec des moyens de comparaison, qui comparent l'angle du clapet d'étranglement avec l'angle d'ouverture corrigé le cas échéant en fonction des mouvements du moteur de positionnement,

– avec une installation qui actionne le moteur de positionnement de telle façon que celui-ci exécute un mouvement de contrôle, quand on constate à partir de la comparaison permanente de l'angle du clapet d'étranglement avec l'angle d'ouverture, que l'angle du clapet d'étranglement est égal à celui-ci ou plus petit que lui,
– par une installation d'exploitation, qui détermine, si l'angle du clapet d'étranglement indique une variation et qui sert à la délivrance d'un signal de défaut du moteur de positionnement au cas où il n'y a pas de variation, par contre à la délivrance d'un signal de défaut d'interruption dans le circuit du contact de ralenti, quand c'est le cas,
– par des moyens qui actionnent, en cas de défaut, l'indicateur pour indiquer le défaut constaté.

Fig. 1

ALPHA_ÜBERMAX

ALPHA_VERMUTET

ALPHA_ÖFFNEN

ALPHA_SOLL

ALPHA_NOT

DROSSELKLAPPENWINKEL ALPHA

T_KONST  T_P1   T_P2    T_P3    T_MOT_EIN   ZEIT T

T_AUSWERT

Fig. 3

START — s1

ALPHA=? — s2

ALPHA> ALPHA_ÜBERMAX? — s3    j → LEERLAUFKONTAKT OFFEN? — s4    j

n                               n

LEERLAUFKONTAKT OFFEN? — s7    n    FEHLER ANZEIGEN — s5

j

ALPHA_OFFNEN=? — s8    STELLMOTOR AUF ALPHA_NOT — s6

ALPHA_VERMUTET BERECHNEN — s9    ENDE

ALPHA=? — s10

Fig. 2

ALPHA<= ALPHA_VERMUTET? — s11    n

j

LEERLAUFKONTAKT OFFEN? — s12    j → PRÜFBEWEGUNG ALPHA MESSEN — s13 → FOLGTE ALPHA DER PRÜFBEWEG.? — s14    j

n                                                                    n

FESTSTELLUNG: STELLM.FEHLER — s18    FESTSTELLUNG: UNTERBR.FEHLER — s15

FEHLER ANZEIGEN — s19    FEHLER ANZEIGEN — s16

KEIN KRAFTSTOFF WENN ALPHA< ALPHA_ÜBERMAX UND N>N_NOT — s20    STELLMOTOR AUF ALPHA NOT FAHREN — s17

ENDE    ENDE